# EUROPEAN PATENT APPLICATION

(11) **EP 0 882 648 A1**
(43) Date of publication of application: **09.12.1998**
(21) Application number: 98830317.8
(22) Date of filing: 22.05.1998
(51) Int. Cl.: B64D 11/06

(54) **Improved pillow structure**

(30) Priority: 06.06.1997 IT RM970340
(71) Applicant: Cordari, Claudio, 00122 Lido di Roma (Roma) (IT); Veneruso, Alberto, 80040 S. Sebastiano al Vesuvio (Napoli) (IT)
(72) Inventor: Cordari, Claudio, 00122 Lido di Roma (Roma) (IT); Veneruso, Alberto, 80040 S. Sebastiano al Vesuvio (Napoli) (IT)
(74) Representative: Iannone, Carlo Luigi

(57) **Abstract**

The invention concems a seat structure, comprising an inflatable pillow (2; 12) comprised of separated or communicating, independent compartments, provided with at least a filling valve (22) and of at least a safety valve (23), a structure (1; 11) containing said inflatable pillow (2; 12), a stuffing and/or covering element (3; 13), to be provided on said inflatable pillow (2; 12).

## Description

The present invention relates to an improved pillow structure.

More particularly, the invention concerns a structure of the above kind, suitable for realising either the back and the seat, realised in such a way to allow to obtain a finished product having remarkably improved features with respect to the presently available products.

The structure suggested according to the present invention is particularly useful for seats to be employed in the aeronautical, naval, railway, automotive transportation field, and like. However, the same solution can be advantageously employed also for other kind of uses, such as chairs, armchairs, sofas, etc.

Presently, seats employed are all realised by a foam material structure or by a vegetal and/or synthetic fibre stuffed structure, etc., rest on a metal and/or plastic frame covered by a fabric cover.

Obviously, all the materials employed will have to satisfy to the safety features provided by the existing rules that can be applied in many use fields. Particularly, in the aeronautical field, on aeroplanes used for civil transportation, a foam material structure is employed.

It is also well known that, beside comfort features for the user, this kind of seat must be as more light as it is possible, in order to exploit in the best way the features of the vehicle with great energy savings on all the transportation means, and particularly on the aeroplanes. Saving 1 Kg for each seat involves n enormous energetic saving. Furthermore, the air company (or the user) can economically exploit said saving since it can increase the goods or passengers charge, thus increasing the profits.

In this situation it is included the solution according to the present invention.

In fact the seat structure suggested by the Applicants has been suitably studied in order to obtain a weight reduction, with the consequent energetic savings, and a reduction of the volume (it can be stored within very reduced spaces).

Another object of the present invention is that of suggesting a structure allowing to absorb dynamic energy and which is self-floating.

Still another object of the present invention is that of realising a structure of the above kind which is comfortable for the user and has fire resistance and toxic gas reduction features in case of fire.

These and other objects are obtained according to the present invention by a structure substantially comprising an air cushion inner element (coupled to or integral with the foam or stuffed material), made up of a single inflatable element with independent compartments, or of a plurality of inflatable elements, a resting element for the user, and a container of said inflatable inner element that can be comprised of an independent element or directly obtained front the seat or back frame.

It is therefore specific object of the present invention a seat structure, comprising an inflatable pillow comprised of separated or communicating, independent compartments, provided with at least a filling valve and of at least a safety valve, a structure containing said inflatable pillow, a stuffing and/or covering element, to be provided on said inflatable pillow.

Preferably, according to the invention, said inflatable pillow can be comprised of a single element having independent compartments.

According to the invention, said independent compartments can be in communication each other by air flowing or pressure balancing orifices, in this case being possible to provide a single filling valve, or it is possible to provide breaking membranes between the different compartments in case of overpressure within the compartments, with a filling valve for each compartment.

Still according to the invention, said pillow can be comprised of a plurality of separated inflatable elements, all provided within said containment element.

Furthermore, according to the invention, said inflatable pillow can be provided with a safety valve for the outflow of the air in case of overpressure.

Always according to the invention, said containment element can be comprised of a shaped structure, made up of metallic material, polycarbonate, ABS, plastic reinforced by fibre glass, or other formable material.

Said containment element can be realised as an independent element or integral with the seat frame upon which the structure according to the invention is provided.

Still according to the invention, said stuffing and/or covering element can comprise a stuffing element realised by foamed material and a fabric covering element.

Always according to the invention, said stuffing and/or covering material can be comprised of a single element.

The materials of the structure according to the invention will be preferably fireproof.

The present invention will be now described, for illustrative but not limitative purposes, according to its preferred embodiments, with particular reference to the figures of the enclosed drawings, wherein:
figure 1 is an exploded view of a first embodiment of a seat structure according to the invention;
figure 2 is an exploded view of a second embodiment of a seat structure according to the invention;
figure 3 is an exploded view of a third embodiment of a seat structure according to the invention;
figure 4 is an exploded view of a first embodiment of a back structure according to the invention;
figure 5 is an exploded view of a second embodiment of a back structure according to the invention;
figure 6 is an exploded view of a third embodiment of a back structure according to the invention;
figure 7 is a lateral view of a first embodiment of a air pillow element for the structure according to the invention; and
figure 8 is a lateral view of a second embodiment of a air pillow element for the structure according to the invention.

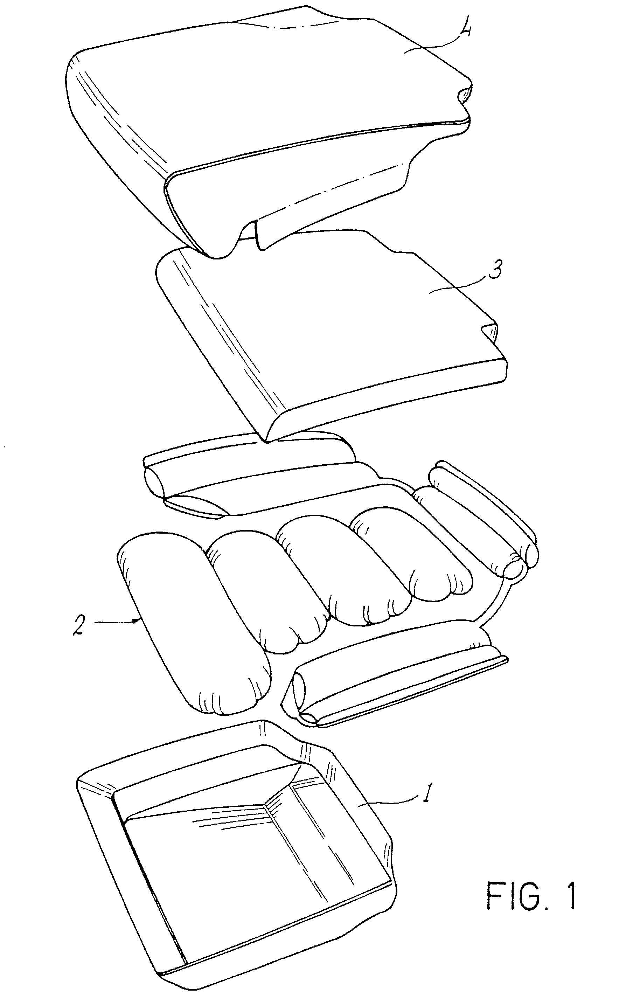

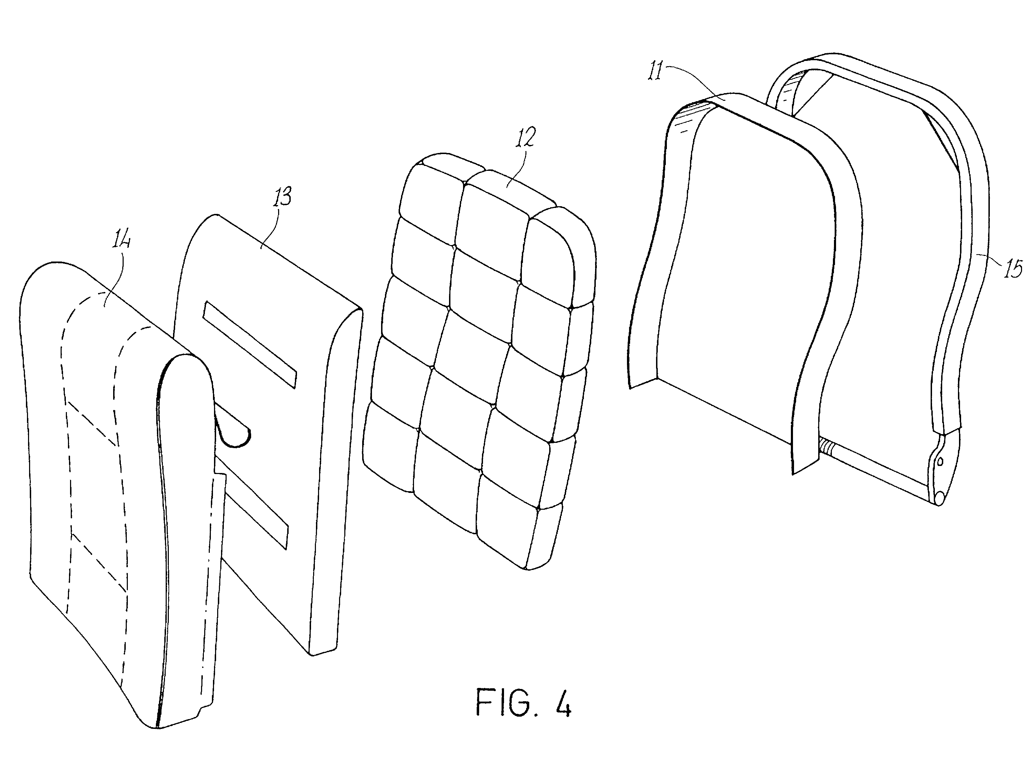

Observing first figure 1 of the enclosed drawings, but taking also the other figures into consideration, it can be noted how the structure according to the invention comprises a seat (figures 1 - 3) or back (figures 4 - 6) container 1 or 11, a seat (figures 1 - 3) or back (figures 4 - 6) air pillow 2 , a traditional foamed covering layer fro the seat 3 (figures 1 - 3) or for the back (figures 4 - 6), and a covering 4 (figures 1 - 3) or 14 (figures 4 - 6)

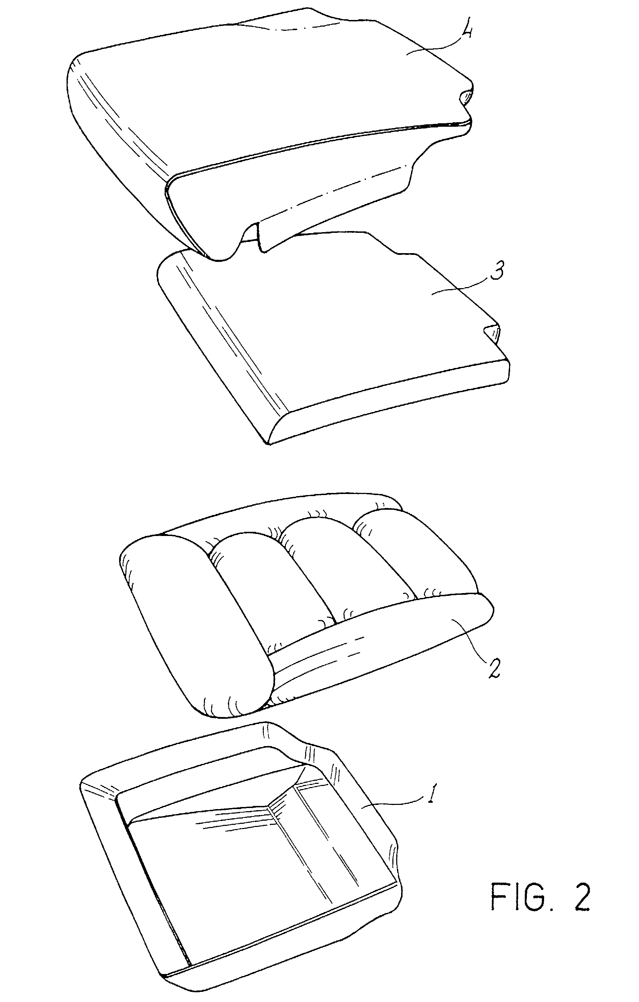

In figure 1, the air pillow 2 is comprised of a series of independent compartment pillows, while in the embodiment of figure 2, it is comprised of a single structure divided into air spaces, with coupling and communication points among the various compartments of the pillow 2.

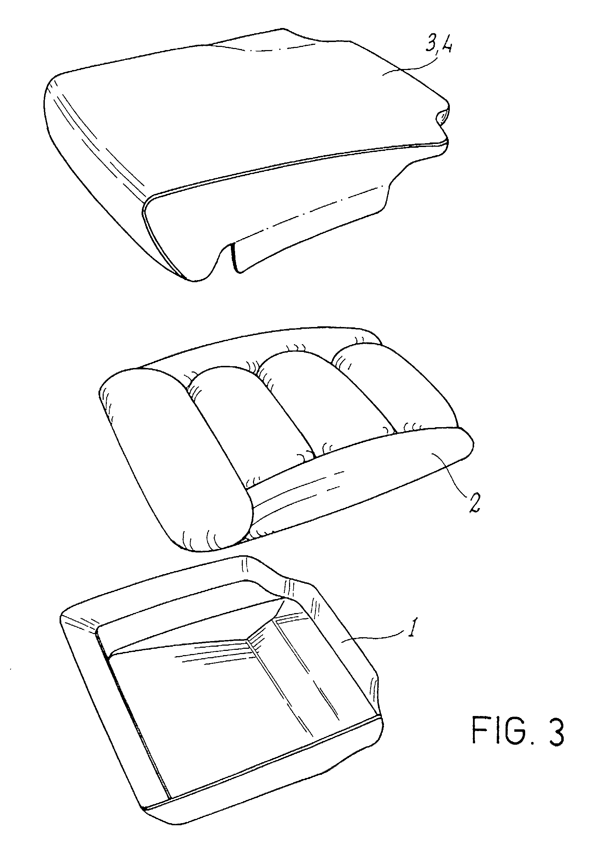

Instead, in the embodiment shown in figure 3, the covering layer 3 and the cover 4 are realised as a single structure.

In figures 4 - 6, embodiments of the back are shown.

In the figures, it is also shown the frame 15 of the back, within which the structure according to the invention is inserted.

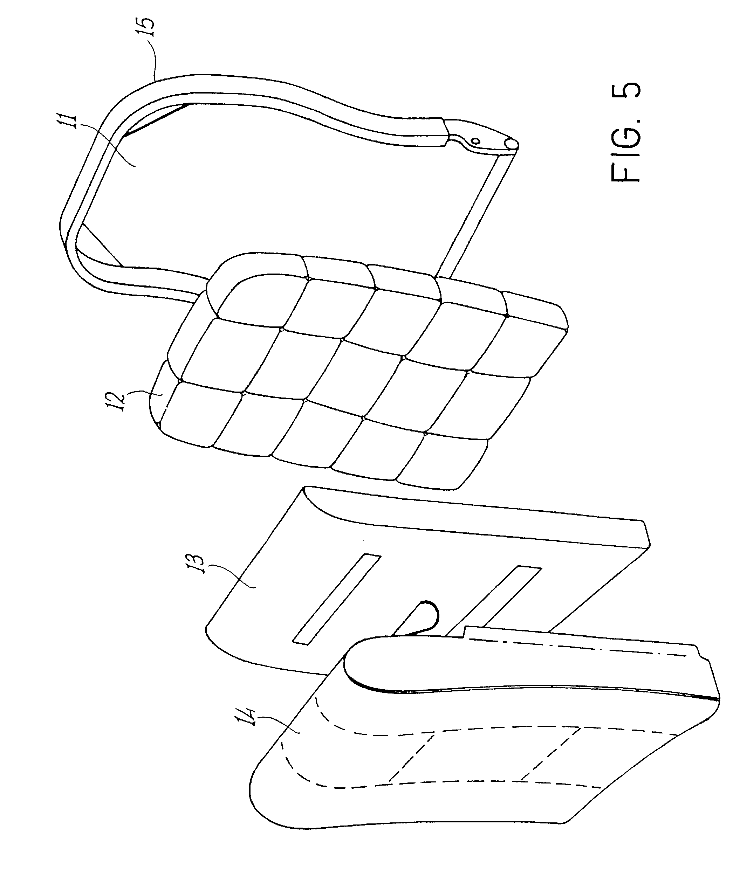

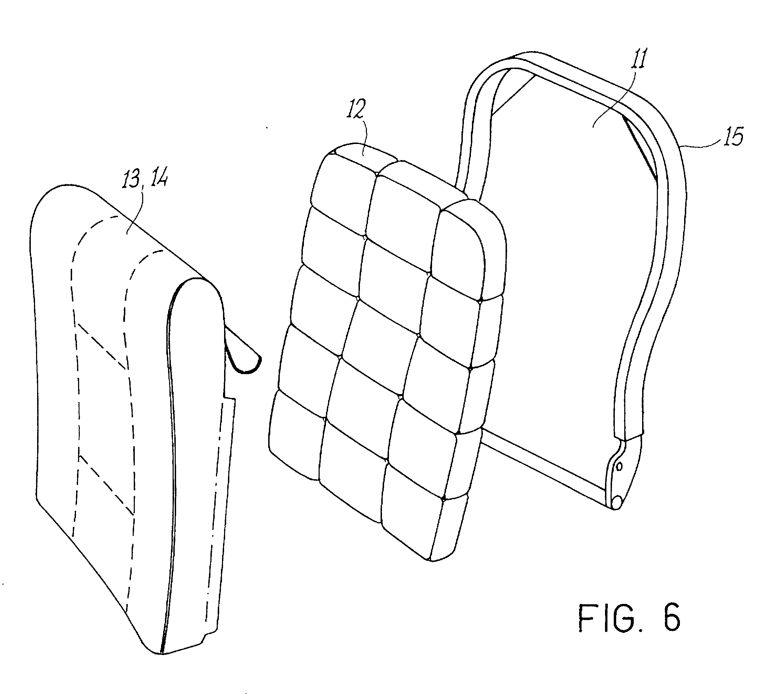

In the embodiment of figure 5, the container 11 is integral with the back frame 15, the same being possible also for the seat, while the embodiment of figure 6 provides both the integration of the frame of the back 15 and of the container 11 and the integration of the covering layer and of the cover 14.

In the following some features of the various parts of the structure according to the invention will be described, said description will be provided in general terms, being the same appropriated both for the seat and the back.

The seat or back container 1 or 11 must be suitably shaped, and has the function of containing the air pillow 2, 12, for all those portions of the same pillow which dilate under the pressure exerted by a weight applied on the seat or rest (back) surface.

The seat or back containers 1 or 11 can be integrated within the armchair frame (bottom sheet and back), as for example shown in figure 5 and 6.

Container 1, 11 can be comprised of any metallic material, polycarbonate, ABS, plastic reinforced by fibre glass, or any other material which can be shaped as a container.

The air pillow 2, 12, in function of its use, can be also employed without the container 1, 11.

As to the seat or back air cushion 2 or 12, it is comprised of soft materials suitable to the kind of use (rubber/fabric-finish rubber, plastic, etc.) and is shaped according to the geometry necessary to the fitting and comfort to be obtained.

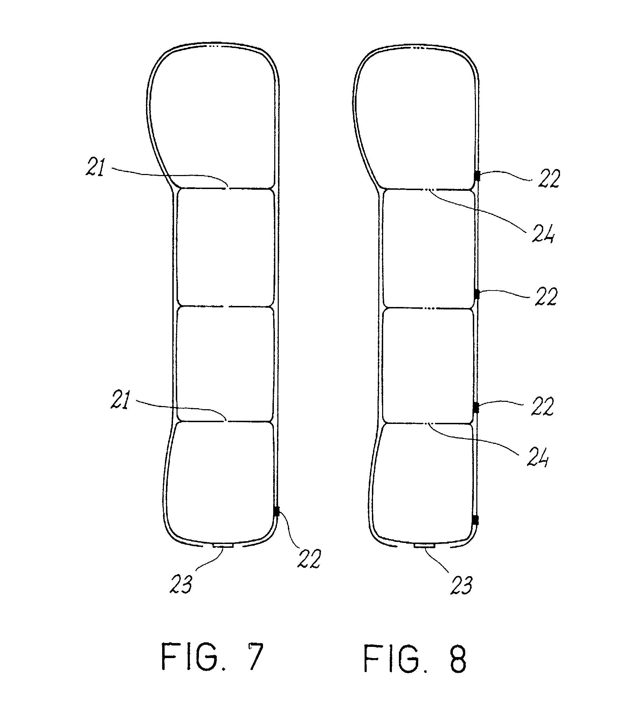

The seat or back pillow 2 or 12 is comprised off single or independent (sectors) compartments, which can be communicating each other by orifices 21 (see figure 7), which allow the flow of the air from one compartment to the other, or completely independent (see figure 8).

They can be connected (single unit), as shown in figures 2 - 6, and therefore communicating or independent (more units) (see figure 1).

Said pillows 2, 12 are provided with filling valve 22 serving to the filling of the air within the pillow 2, 12. Said valve 22 is single in case various compartments communicate each other by orifices 21 (figure 7), thus allowing the passage of the air from one compartment to the other, or can be in number corresponding to the number of air compartments to be filled in with air, if the system is organised by sectors and independently (Pillows do not communicate) (see figure 8).

Furthermore, said pillow 2, 12 provides a safety valve 23 which can be provided on the compartments (more than one valve) or which can be single when the compartments communicate. Safety valves 23 have the object of making the air outflowing in case of excessive filling of air within the pillow 2, 12 in emergency situations, for example due to depressurisation within the cabin (a pillow filled with air at the sea level, when in altitude, increases the internal pressure proportionally to the height, up to reaching an inner pressure of the pillow higher than the outer pressure, thus inducing the bursting of the air pillow, unless a pressure balancing valve is provided on the same pillow).

In order to avoid the necessity of providing more safety valves 23 on divided air compartment (not communicating) pillows 2, 12, as shown in figure 8, on the separation of the various pillow 2, 12 departments breaking membranes 24 placed on all the separation walls common (adjacent) with the air compartments are provided. When the pillow. 2, 12 reaches a pressure higher than the established one, the safety valve 23 provided on only one compartment works making the inner air outflowing. The outflow of the inner air provokes an unbalancing of the pressure on the wall where the breaking membrane 24 is placed, which, subjected to a pressure higher from inside toward outside, breaks, making the air outflowing into the air compartment provided with safety valve 23, thus allowing the balancing of the air pressure within the pillow 2, 12, since they are now communicating.

The breaking membrane 24 is connected to all the compartments, thus allowing a balancing of the pressures within the pillow 2, 12 in case of breaking during an emergency.

The controlled pressurisation within the cabin during the flight does not influence the condition of the air pillows 2, 12, since the pressurisation within the cabin is kept constant and is always lower than or equal to the pressure at a maximum altitude of 1500/2000 metres.

The covering layer 3, 13 comprised of traditional foamed material is of the standard or fireproof type and is provided on the upper surface of the system to obtain the softness effect during the seating.

The foamed material could not be necessary, as illustrated in some of the embodiments.

The covering 4, 14 has the function of maintaining the parts of the structure according to the invention assembled, and at the same time aesthetically finishes the seat and/or the back.

As already mentioned, the structure according to the invention allows to obtain many important results.

First of all, a reduction of the weights is obtained allowing the make the masses motion easier with the same volume and the same force applied, making a comparison with the existing pillows.

Consequently, a remarkable energetic saving is obtained due to the weight reduction of the pillow 2, 12, since energy necessary for the motion of a mass is proportionally reduced with the reduction of the weight.

Furthermore, by the structure according to the invention has a reduction of the dimensions since the seat, if not employed, can be stored within very reduced spaces emptying the air compartment(s) and folding the pillow 2, 12 or disassembling the parts comprising the same.

The structure obtained is a good dynamic energy absorber in view of the particular solutions that, in case of dynamic impacts, are activated: for example the breaking membranes 24 can be mentioned , which are calibrated for determined pressure values which, when stressed by pressure due to external dynamic forces, higher than the pressure value established beforehand, break, making the air gradually oufflowing, thus allowing a partial or total absorption of the dynamic energy applied to the mass. Furthermore, the reduction of the weight (mass) facilitates the outcome of dynamic tests required in the aeronautical field according to the new FAA, TSO C127 rules.

Moreover, the structure according to the invention is self-floating, since the provision of air spaces within the pillow 2, 12 reduces the pit particles of the standard foamed polyurethane pillow or of the other eventual stuffing which contacting the water can fill or absorb water reducing the floating line of a standard pillow, which sinks if loaded with a minimum weight, unless it is equipped with thicker foam elements thus reducing the pits but also the softness of the pillow and therefore its comfort.

In case of a structure according to the invention, the above effect is reduced or eliminated proportionally to the reduced amount of foamed material and stuffing employed.

Notwithstanding the above, in case of a combined pillow (foamed material/air), the pillow always maintain a floating line higher than the standard one, since the inner air spaces make the pillow unsinkable even applying bigger weights.

Also the comfort of the structure according to the invention is optimal, increasing the seat and back features exploiting the characteristics of the uniform distribution of the air on any passenger resting surface, allowing to the pillows to take the anatomical shape in the specific portion.

Further, the back pillow allow to obtain at the same time a lumbar support effect, since as a function of the pressure exerted by the back, air goes in the points where the pressure is lower, thus giving a continuous support feeling on all those areas where the air pillow is provided.

The air pillow allows to obtain a thermal insulation on any surface contacting the metallic structure of the armchair, this effect not being possible with the foamed material, in this case being a function of the used thickness.

Furthermore, employing the structure according to the invention, a remarkable reduction of the vibration due to any moving transport vehicle or to any other working motor is obtained.

Another feature of the structure according to the invention is that relevant to the fire resistance and to the reduction of the noxious gases in case of fire, since it is comprised of a big percentage of air much higher than other masses, in any case comprised of fire-retardant material. In this way the amount of materials which can feed the fire is remarkably reduced, with the relevant reduction of noxious gases emitted by the same materials when burnt.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Seat structure, characterised in that it comprises an inflatable pillow comprised of separated or communicating, independent compartments, provided with at least a filling valve and of at least a safety valve, a structure containing said inflatable pillow, a stuffing and/or covering element, to be provided on said inflatable pillow.

2. Seat structure according to claim 1, characterised in that said inflatable pillow is comprised of a single element having independent compartments.

3. Seat structure according to claim 2, characterised in that said independent compartments are in communication each other by air flowing or pressure balancing orifices.

4. Seat structure according to claim 3, characterised in that, a single filling valve is provided.

5. Seat structure according to claim 2, characterised in that breaking membranes between the different compartments are provided to be used in case of overpressure within the compartments.

6. Seat structure according to claim 1, characterised in that, a filling valve for each compartment is provided.

7. Seat structure according to claim 1, characterised in that said pillow is comprised of a plurality of separated inflatable elements, all provided within said containment element.

8. Seat structure according to one of the preceding claims, characterised in that said inflatable pillow is provided with a safety valve for the outflow of the air in case of overpressure.

9. Seat structure according to one of the preceding claims, characterised in that said containment element is comprised of a shaped structure, made up of metallic material, polycarbonate, ABS, plastic reinforced by fibre glass, or other formable material.

10. Seat structure according to one of the preceding claims, characterised in that said containment element is realised as an independent element.

11. Seat structure according to one of the preceding claims 1-9, characterised in that said containment element is realised integral with the seat frame upon which the structure according to the invention is provided.

12. Seat structure according to one of the preceding claims, characterised in that said stuffing and/or covering element comprises a stuffing element realised by foamed material and a fabric covering element.

13. Seat structure according to one of the preceding claims, characterised in that said stuffing and/or covering material is comprised of a single element.

14. Seat structure according to one of the preceding claims, characterised in that the materials employed are fireproof.
